# EUROPÄISCHE PATENTSCHRIFT

(11) **EP 2 718 143 B1**
(45) Veröffentlichungstag und Bekanntmachung des Hinweises auf die Patenterteilung: **22.08.2018**
(21) Anmeldenummer: 11793682.3
(22) Anmeldetag: 10.12.2011
(51) Int. Cl.: B60N 2/90, B60N 2/23

(54) **VERSTELLVORRICHTUNG, INSBESONDERE FÜR EINEN FAHRZEUGSITZ**
ADJUSTING DEVICE, IN PARTICULAR FOR A VEHICLE SEAT
DISPOSITIF DE POSITIONNEMENT, NOTAMMENT POUR UN SIÈGE DE VÉHICULE

(30) Priorität: 11.06.2011 DE 102011104013
(43) Veröffentlichungstag der Anmeldung: 16.04.2014
(73) Patentinhaber: Daimler AG, 70327 Stuttgart (DE)
(72) Erfinder: AUTENRIETH, Ingo, 89077 Ulm (DE); HILSCHER, Alexander, 89231 Neu-Ulm (DE); MÄUSLE, Rainer, 89356 Haldenwang (DE)
(74) Vertreter: JENSEN & SON
(86) Internationale Anmeldenummer: PCT/EP2011/006242
(87) Internationale Veröffentlichungsnummer: WO 2012/171543

(56) Entgegenhaltungen:
- EP-A1- 0 594 526
- CN-Y- 201 318 410
- DE-A1- 10 247 503
- JP-A- 8 294 428

## Beschreibung

Die Erfindung betrifft eine Verstellvorrichtung zum Verstellen eines ersten Teiles relativ zu einem zweiten Teil gemäß dem Oberbegriff des Anspruchs 1.

Eine derartige Verstellvorrichtung weist beispielsweise eine Gasfeder oder ein vergleichbares (einen Verstellweg bereitstellendes) Element auf, die bzw. das dazu ausgebildet ist, die beiden Teile beweglich miteinander zu verbinden, sowie eine Lagervorrichtung, die ausgebildet ist, an dem ersten oder dem zweiten Teil festgelegt zu werden, wobei ein erstes freies Ende der Gasfeder an der Lagervorrichtung gelagert ist.

Aus dem Dokument CN 201 318 410 Y ist z.B. nach den Figuren 4 und 5 eine Gasfeder offenbart, bei welcher erstes freies Ende der Gasfeder 11 über ein am ersten freien Ende ausgebildetes Innengewinde auf einem an einer Lagervorrichtung 12, 13 ausgebildeten Außengewinde gelagert ist, welche mit einer Kontermutter 14 am freien Ende der Gasfeder spielfrei verspannt wird. Ein weiteres, einen Verstellweg bereitstellendes Element ist z.B.aus Figur 1 von Dokument DE 102 47 503 A1 bekannt, wobei an dessen freien Ende zwei Gewindebuchsen 6 mittels zweier Schraubenbolzen 8 an einem Lagerbock 3 gehalten werden.

Solche Gasfedern weisen für gewöhnlich ein hohlzylindrisches, entlang einer Längsachse (Zylinderachse) erstrecktes Gehäuse auf, in dem konzentrisch zur Längsachse eine Kolbenstange mit einem daran vorgesehen Kolben angeordnet ist. Die Kolbenstange ist dabei stirnseitig (an einem freien Ende des Gehäuses) aus dem Gehäuse über eine Durchgangsöffnung herausgeführt, die mit einer Dichtung abgedichtet ist, so dass die Kolbenstange in der Durchgangsöffnung gleiten kann und ein in dem Gehäuse befindliches Druckmedium nicht aus dem Gehäuse entweichen kann.

Der Kolben unterteilt vorzugsweise den durch das Gehäuse definierten Innenraum in einen ersten und einen zweiten Teilraum, die jeweils mit dem Druckmedium gefüllt sind. Die beiden Teilräume sind dabei vorzugsweise über ein Ventil miteinander verbunden. Ist das Ventil geöffnet, kann der Kolben samt Kolbenstange entlang der Längsachse bezüglich des Gehäuses verfahren werden. Ist das Ventil geschlossen, ist die Kolbenstange bezüglich des Gehäuses arretiert. Andere Mechanismen zum Arretieren der Kolbenstange bezüglich des Gehäuses sind auch denkbar.

Problematisch bei der Lagerung einer Gasfeder an einer Lagervorrichtung ist insbesondere das Lagerspiel zwischen der Gasfeder einerseits und der Lagervorrichtung andererseits, über die die Gasfeder z.B. an einer Rückenlehne oder einem sonstigen Bereich eines Kraftfahrzeugsitzes festgelegt sein kann, das im Betrieb zu störenden Geräuschen und Schwingungen führen kann, was für den Fahrgast einen Nachteil hinsichtlich des Komforts bedeutet.

Der Erfindung liegt daher das Problem zugrunde, eine Verstellvorrichtung bzw. eine Lagerung anzugeben, die hinsichtlich der vorgenannten Nachteile verbessert ist.

Dieses Problem wird durch eine Verstellvorrichtung mit den Merkmalen des Anspruchs 1 gelöst.

Danach ist vorgesehen, dass das erste freie Ende der Gasfeder über ein am ersten freien Ende ausgebildetes Innengewinde auf einem an der Lagervorrichtung ausgebildeten Außengewinde gelagert ist.

Unter einem Gewinde ist dabei eine profilierte Einkerbung (oder Erhebung) zu verstehen, die fortlaufend wendelartig um eine zylinderförmige Wandung - innen (Innengewinde) oder außen (Außengewinde) - in einer Schraubenlinie verläuft.

Die Einkerbung weist dabei zwei einander gegenüberliegende Flanken auf, deren Höhe normal zur zylinderförmigen Wandung die Flankenhöhe ist. Der von den beiden Flanken eingeschlossene Winkel ist der Flankenwinkel.

Der Abstand (entlang der Zylinderachse der besagten zylinderförmigen Wandung) zweier einander abgewandter Flanken eines Gewindeganges bei einer definierten Höhe normal zur zylindrischen Wandung (z.B. auf halber Flankenhöhe, am Fuß der Flanke oder am Kopf der Flanke) kann als Flankenbreite herangezogen werden.

Weiterhin interessant ist der Abstand zweier einander zugewandter Flanken (z.B. auf halber Flankenhöhe, am Fuß der Flanke oder am Kopf der Flanke) zweier aufeinanderfolgender Gewindegänge, der vorliegend als Flankenabstand bezeichnet wird.

Weiterhin bezeichnet die Gewindesteigung den Abstand zweier gleichgerichteter Flanken aufeinanderfolgender Gewindegänge, das heißt den Abstand zwischen zwei Gewindestufen entlang der Gewindeachse (Zylinderachse der zylinderförmigen Wandung), oder anders gesagt, den axialen Weg, der durch eine Umdrehung des betreffenden Gewindes zurückgelegt wird.

Bei dem ersten freien Ende der Gasfeder kann es sich vorliegend um ein freies (außerhalb des Gehäuses befindliches) Ende der Kolbenstange der Gasfeder oder um ein freies Ende des Gehäuses handeln, das einem freien Ende des Gehäuses, an dem die Durchgangsöffnung des Gehäuses vorgesehen ist, entlang der Längsachse des Gehäuses gegenüberliegt.

Des Weiteren kann es sich bei dem ersten Teil um ein Element (insbesondere Rahmenelement) einer Rückenlehne handeln und bei dem zweiten Teil um einen sonstigen Bereich eines Kraftfahrzeuges, insbesondere eines Fahrzeugsitzes, an den z.B. die besagte Rückenlehne angelenkt ist.

Des Weiteren kann die Lagervorrichtung an dem ersten Teil oder dem zweiten Teil angebracht sein oder einstückig mit diesem verbunden sein. Die Lagervorrichtung weist insbesondere einen Lagerbock auf, der zwei einander gegenüberliegende Schenkel aufweist, die beispielsweise an dem ersten oder dem zweiten Teil festgelegt oder mit diesem einstückig verbunden sein können (z.B. mit einem Rahmenelement einer Rückenlehne eines Fahrzeugsitzes).

Es kann natürlich auch eine weitere Lagervorrichtung vorgesehen sein, so dass die Gasfeder beispielsweise über das erste freie Ende an der einen Lagervorrichtung Und über ein am Gehäuse der Gasfeder ausgebildetes zweites freies Ende an der weiteren Lagervorrichtung gelagert ist, wobei jeweils ein Außengewinde der Lagervorrichtung auf einem Innengewinde des ersten bzw. zweiten freien Endes der Gasfeder gelagert ist, das mit dem jeweiligen Außengewinde verschraubt ist.

Im Folgenden soll lediglich eine derartige Lagerung an einer Lagervorrichtung beschrieben werden, wobei natürlich diese Art der Lagerung an dem ersten und/oder dem zweiten Teil vorgenommen werden kann (siehe oben).

Damit das Außengewinde so in das Innengewinde eingreifen kann, dass eine spielfreie Lagerung des Innengewindes auf dem Außengewinde resultiert, ist vorgesehen, dass das Innengewinde und das Außengewinde eine unterschiedliche Gewindesteigung aufweisen.

Alternativ hierzu können die beiden Gewinde einen unterschiedlichen Durchmesser aufweisen oder eine unterschiedliche Flankenhöhe oder einen unterschiedlichen Flankenwinkel oder eine unterschiedliche Flankenbreite oder einen unterschiedlichen Flankenabstand.

Vorzugsweise ist zumindest eines der beiden Gewinde elastischer ausgebildet als das andere Gewinde, so dass das entsprechende Gewinde, insbesondere bei vorgenannten unterschiedlichen Parametern, beim Verschrauben der beiden Gewinde definiert nachgibt bzw. verformt wird, um die spielfreie Lagerung zu ermöglichen.

Am ersten freien Ende der Gasfeder (der Kolbenstange) ist eine Lagerbuchse mit einer durch eine umlaufende Wandung begrenzten Aufnahme vorgesehen, wobei das besagte Innengewinde an der umlaufenden Wandung ausgebildet ist.

Des Weiteren weist die Lagervorrichtung einen Bolzen auf, insbesondere in Form einer Bundschraube, die eine umlaufende Außenseite aufweist, an der das besagte Außengewinde ausgebildet ist. Dabei fällt die Längsachse (Zylinderachse) des Bolzens mit der Gewindeachse des Außengewindes zusammen.

Um die vorgenannte unterschiedliche Elastizität oder Härte zu erreichen, kann beispielsweise einer der beiden Verbindungspartner (Lagerbuchse oder Bolzen) aus Kunststoff und der jeweils andere aus einem Metall bzw. einem weniger elastischen (harten) Material gefertigt sein.

Alternativ oder ergänzend kann ein Toleranzausgleich mittels einer Beschichtung eines der beiden Gewinde (Innen- oder Außengewinde) mit einem geeigneten Material, realisiert werden.

Der besagte Bolzen ist an einem Lagerbock der Lagervorrichtung festgelegt. Hierzu ist der Bolzen in eine am Lagerbock ausgebildete erste Durchgangsöffnung geführt, wobei der Bolzen mit einem freien Ende in einer Buchse aufgenommen ist, die vorzugsweise in eine am Lagerbock ausgebildete zweite Durchgangsöffnung eingeführt ist, die insbesondere mit der ersten Durchgangsöffnung fluchtet.

Ein weiterer Gedanke der Erfindung ist die Bereitstellung eines Fahrzeugsitzes, insbesondere Kraftfahrzeugsitzes, mit einer erfindungsgemäßen Verstellvorrichtung gemäß Anspruch 9. Hierbei ist der erste Teil bzw. der zweite Teil als ein Rahmenelement einer Rückenlehne des Fahrzeugsitzes ausgebildet. Das jeweils andere Teil ist dann ein Teil des Fahrzeugsitzes oder einer Fahrzeugumgebung, an das die Rückenlehne z.B. angelenkt ist.

Weitere Merkmale und Vorteile der Erfindung sollen mittels der nachfolgenden Figurenbeschreibungen eines Ausführungsbeispiels anhand der Figuren erläutert werden.

Dabei zeigen:
- Fig. 1: eine perspektivische Ansicht einer erfindungsgemäßen Verstellvorrichtung mit einer Gasfeder; und
- Fig. 2: eine geschnittene Ansicht einer an einem ersten freien Ende der Gasfeder ausgebildeten Lagerbuchse.

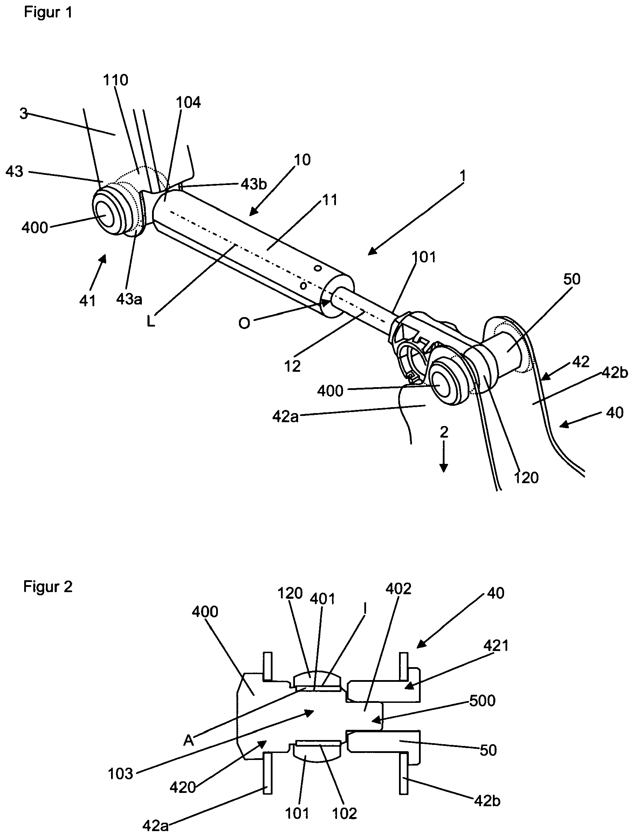

Figur 1 zeigt im Zusammenhang mit Figur 2 eine erfindungsgemäße Verstellvorrichtung 1, bei der ein erstes Teil 2 eines Fahrzeugsitzes über eine Gasfeder 10, die über ein erstes freies Ende 101 einer Kolbenstange 12 der Gasfeder 10 an einer am ersten Teil 2 vorgesehen Lagervorrichtung 40 gelagert ist, mit einer weiteren, an einem zweiten Teil 3 des Fahrzeugsitzes vorgesehenen Lagervorrichtung 43 verbunden ist, wobei jenes zweite Teil 3 als ein längserstrecktes Element ausgebildet ist, das einen Teil eine Skeletts (Rahmens) einer Rückenlehne des Fahrzeugsitzes bildet, die verschwenkbar an ein Sitzteil des Fahrzeugsitzes oder ein sonstiges Teil angelenkt ist.

Die Kolbenstange 12 der Gasfeder 10 ist gemäß Figur 1 in einem Gehäuse 11 der Gasfeder 10 verschiebbar gelagert, das hohlzylindrisch ausgebildet ist und sich entlang einer Längsachse L (Zylinderachse) erstreckt. Hierzu ist die ebenfalls entlang der Längsachse L erstreckte Kolbenstange 12 durch eine Durchgangsöffnung O in das Gehäuse 11 eingeführt. In einem vom Gehäuse 11 definierten Innenraum des Gehäuses 11 ist dabei ein mit der Kolbenstange 12 verbundener Kolben (nicht gezeigt) angeordnet, der den Innenraum des Gehäuses 11 in zwei Teilräume unterteilt, die jeweils mit einem Druckmedium gefüllt sind. Der Kolben kann hierbei in dem Gehäuse 11 arretiert werden, wenn die beiden Teilräume nicht strömungsverbunden sind, da in diesem Fall das in den beiden Teilräumen befindliche Druckmedium nicht signifikant durch den Kolben komprimierbar ist. Sind die beiden Teilräume strömungsverbunden, kann der Kolben im Gehäuse 11 bewegt werden, wobei das Druckmedium von dem einen Teilraum in den anderen Teilraum strömen kann. Dies ermöglicht das Verstellen bzw. Verschwenken der Rückenlehne.

Zum Lagern der Gasfeder 10 an dem ersten Teil 2 ist an dem ersten freien Ende 101 der Kolbenstange 12 der Gasfeder 10 eine Lagerbuchse 120 ausgebildet, die eine Ausnehmung 103 aufweist, die durch eine umlaufende zylindrische Wandung 102 begrenzt wird, an der ein Innengewinde I ausgebildet ist. Dieses Innengewinde I ist mit einem Außengewinde A einer Bundschraube 400 der Lagervorrichtung 40 des ersten Teiles 2 verschraubt, wobei jenes Außengewinde A auf einer umlaufenden Außenseite 401 der Bundschraube 400 ausgebildet ist.

Die Bundschraube 400 ist dabei durch eine erste Durchgangsöffnung 420 eines Lagerbockes 42 der Lagervorrichtung 40 des ersten Teiles 2 geführt, die an einem ersten Schenkel 42b des Lagerbockes 42 ausgebildet ist und mit einem freien Ende 402 in einer Ausnehmung 500 einer Buchse 50 aufgenommen ist, die durch eine zweite Durchgangsöffnung 421 des Lagerbocks 42 geführt ist, die an einem zweiten Schenkel 42b des Lagerbocks 42 ausgebildet ist, der sich parallel zum ersten Schenkel 42a des Lagerbocks 42 erstreckt. Erfindungsgemäß wird somit die Lagerfläche der Gasfeder 10 am ersten Teil 2 durch ein Außengewinde A gebildet.

Weiterhin ist die Gasfeder 10 vorzugsweise über ein zweites freies Ende 104 (am Gehäuse 11 der Gasfeder 10) in analoger Art an dem besagten zweiten Teil (Rückenlehne) 3 gelagert. Hierzu ist am zweiten freien Ende 104 ebenfalls eine Lagerbuchse 110 mit einem Innengewinde ausgebildet, in das ein Außengewinde einer Bundschraube 400 eingreift. Die weitere Lagervorrichtung 41 bzw. deren Lagerbock 43 wird dabei bevorzugt durch das zweite Teil 3 selbst gebildet, das einen ersten und einen gegenüberliegenden zweiten Schenkel (eines Lagerbockes) 43a, 43b aufweist, die vorzugsweise einstückig an das besagte zweite Teil 3 angeformt sind. Dabei ist in dem ersten Schenkel 43a eine erste Durchgangsöffnung und in dem zweiten Schenkel 43b eine zweite Durchgangsöffnung ausgebildet, wobei durch die erste Durchgangsöffnung jene weitere Bundschraube 400 und durch die zweite Durchgangsöffnung eine entsprechende weitere Buchse (nicht gezeigt) eingeführt ist, in deren Ausnehmung wiederum ein freies Ende der besagten weiteren Bundschraube 400 eingreift.

Die erfindungsgemäße Lösung ermöglicht somit das spielfreie Verbinden zweier zueinander beweglicher Teile 2, 3 eines Fahrzeugsitzes über eine Gasfeder 10, indem jeweils ein Innengewinde eines Verbindungspartners auf einem Außengewinde des anderen Verbindungspartners gelagert wird.

## Patentansprüche

1. Verstellvorrichtung zum Verstellen eines ersten Teiles relativ zu einem zweiten Teil, mit:
- einer Gasfeder (10), die dazu eingerichtet und vorgesehen ist, die beiden Teile (2, 3) miteinander zu verbinden,
- einem ersten freien Ende (101) der Gasfeder (10),
- einer Lagervorrichtung (40), die dazu eingerichtet und vorgesehen ist, an dem ersten oder an dem zweiten Teil (2, 3) festgelegt zu werden,
- wobei das erste freie Ende (101) der Gasfeder (10) an der Lagervorrichtung (40) gelagert ist,
und wobei
das erste freie Ende (101) der Gasfeder (10) über ein am ersten freien Ende (101) ausgebildetes Innengewinde (I) auf einem an der Lagervorrichtung (40) ausgebildeten Außengewinde (A) gelagert ist,
**dadurch gekennzeichnet, dass** das Innengewinde (I) und das Außengewinde (A) eine unterschiedliche Gewindesteigung, einen unterschiedlichen Durchmesser, eine unterschiedliche Flankenhöhe, einen unterschiedlichen Flankenwinkel, einen unterschiedlichen Flankenabstand und/oder eine unterschiedliche Flankenbreite aufweisen, so dass insbesondere das Außengewinde (A) spielfrei in das Innengewinde (I) eingreift, wobei am ersten freien Ende (101) eine Lagerbuchse (120) mit einer durch eine umlaufende Wandung (102) begrenzten Ausnehmung (103) vorgesehen ist, wobei jenes Innengewinde (I) an der umlaufenden Wandung (102) ausgebildet ist, wobei die Lagervorrichtung (40) einen Bolzen (400), insbesondere in Form einer Bundschraube, mit einer umlaufenden Außenseite (401) aufweist, an der das Außengewinde (A) ausgebildet ist, wobei der Bolzen (400) durch eine erste Durchgangsöffnung (420) eines Lagerbockes (42) der Lagervorrichtung (40) geführt ist, und wobei der Bolzen (400) mit einem freien Ende (402) des Bolzens (400) in einer Buchse (50) aufgenommen ist.

2. Verstellvorrichtung nach Anspruch 1,
**dadurch gekennzeichnet, dass** das Innengewinde (I) aus einem Innengewindematerial und das Außengewinde (A) aus einem Außengewindematerial besteht, wobei die beiden Materialien eine unterschiedliche Elastizität aufweisen.

3. Verstellvorrichtung nach Anspruch 1 oder 2, **dadurch gekennzeichnet, dass** die Buchse (50) in einer zweiten Durchgangsöffnung (421) des Lagerbocks (42) angeordnet ist, die insbesondere mit der ersten Durchgangsöffnung (420) fluchtet.

4. Fahrzeugsitz, insbesondere für ein Kraftfahrzeug, mit einer Verstelleinrichtung (1) nach einem der vorhergehenden Ansprüche, **dadurch gekennzeichnet, dass** das erste Teil (2) oder das zweite Teil (3) als ein Rahmenelement einer Rückenlehne des Fahrzeugsitzes ausgebildet ist.

## Claims

1. Adjusting device for adjusting a first part relative to a second part, comprising:
- a pneumatic spring (10) configured and provided for joining the two parts (2, 3) to each other,
- a first free end (101) of the pneumatic spring (10),
- a bearing device (40) configured and provided for fixing to the first or the second part (2, 3),
- wherein the first free end (101) of the pneumatic spring (10) is bearing-mounted on the bearing device (40),
and wherein
the first free end (101) of the pneumatic spring (10) is mounted by way of a female thread (I) formed at the first free end (101) on a male thread (A) formed on the bearing device (40),
**characterised in that** the female thread (I) and the male thread (A) have a different pitch, a different diameter, a different flank height, a different flank angle, a different flank spacing and/or a different flank width, so that the male thread (A) in particular engages without play with the female thread (I), wherein a bearing bush (120) with a recess (103) bounded by a continuous wall (102) is provided at the first free end (101), wherein that female thread (I) is formed at the continuous wall (102), wherein the bearing device (40) comprises a bolt (400) in particular in the form of a washer head bolt, with a continuous outside (401) on which the male thread (A) is formed, wherein the bolt (400) is guided through a first through-opening (420) of a bearing block (42) of the bearing device (40) and wherein the bolt (400) is accommodated in a bush (50) by a free end (402) of the bolt (400).

2. Adjusting device according to claim 1,
**characterised in that** the female thread (I) consists of a female thread material and the male thread (A) consists of a the male thread material, the two materials having a different elasticity.

3. Adjusting device according to claim 1 or 2,
**characterised in that** the bush (50) is located in a second through-opening (421) of the bearing block (42), which is in alignment with the first through-opening (420) in particular.

4. Vehicle seat, in particular for a motor vehicle, having an adjusting device according to any of the preceding claims, **characterised in that** the first part (2) and the second part (3) are designed as a frame element of a backrest of the vehicle seat.

## Revendications

1. Dispositif de réglage destiné à régler une première partie par rapport à une seconde partie, comprenant :
- un ressort à gaz (10) qui est conçu pour relier ensemble les deux parties (2, 3),
- une première extrémité libre (101) du ressort à gaz (10),
- un dispositif de palier (40) qui est conçu pour être fixé sur la première ou la seconde partie (2, 3),
- la première extrémité libre (101) du ressort à gaz (10) étant montée sur le dispositif de palier (40),
et
la première extrémité libre (101) du ressort à gaz (10) est montée au-dessus d'un filetage intérieur (I) formé sur la première extrémité libre (101) sur un filetage extérieur (A) formé sur le dispositif de palier (40),
**caractérisé en ce que** le filetage intérieur (I) et le filetage extérieur (A) comportent une inclinaison de filetage différente, un diamètre différent, une hauteur de flanc différente, un angle de flanc différent, un écart de flanc différent et/ou une largeur de flanc différent, de sorte qu'en particulier le filetage extérieur (A) vienne en prise sans jeu dans le filetage intérieur (I), sur la première extrémité (101) étant disposée un coussinet (120) ayant un évidement (103) limité par une paroi (102) rotative, chaque filetage intérieur (I) étant formé sur la paroi rotative (102), le dispositif de palier (40) comportant un boulon (400) en particulier sous la forme d'une vis à collerette, ayant un côté extérieur rotatif (401), sur lequel le filetage extérieur (A) est formé, le boulon (400) étant guidé à travers une première ouverture de passage (420) d'un support de palier (42) du dispositif de palier (40), et le boulon (400) étant logé au moyen d'une extrémité libre (402) du boulon (400) dans une douille (50).

2. Dispositif de réglage selon la revendication 1, **caractérisé en ce que** le filetage intérieur (I) est constitué d'un matériau de filetage intérieur et le filetage extérieur (A) est constitué d'un matériau de filetage extérieur, les deux matériaux présentant une élasticité différente.

3. Dispositif de réglage selon la revendication 1 ou la revendication 2, **caractérisé en ce que** la douille (50) est disposée dans une seconde ouverture de passage (421) du support de palier (42) qui est alignée en particulier avec la première ouverture de passage (420).

4. Siège de véhicule, en particulier d'un véhicule automobile, comprenant un dispositif de réglage (1) selon l'une quelconque des revendications précédentes, **caractérisé en ce que** la première partie (2) ou la seconde partie (3) est conçue sous la forme d'un élément de cadre d'un dossier du siège de véhicule automobile.
